# EUROPEAN PATENT APPLICATION

(11) **EP 3 793 273 A1**
(43) Date of publication of application: **17.03.2021**
(21) Application number: 18918245.4
(22) Date of filing: 09.05.2018
(51) Int. Cl.: H04W 52/38, H04L 27/26, H04W 16/28, H04W 72/04, H04W 92/20

(54) **BASE STATION APPARATUS AND USER EQUIPMENT**

(71) Applicant: NTT DOCOMO, INC., Chiyoda-ku Tokyo 100-6150 (JP)
(72) Inventor: TAKAHASHI, Hideaki, Tokyo 100-6150 (JP); UMEDA, Hiromasa, Tokyo 100-6150 (JP); ANDOU, Kei, Tokyo 100-6150 (JP)
(74) Representative: Hoffmann Eitle
(86) International application number: PCT/JP2018/018007
(87) International publication number: WO 2019/215858

(57) **Abstract**

A first base station apparatus includes a transmitting unit that transmits, to a second base station apparatus among a plurality of base station apparatuses, information indicating a maximum transmit power of user equipment with respect to the first base station apparatus and the second base station apparatus, a receiving unit that receives, from the second base station apparatus, information for a request to configure the maximum transmit power, and a setting unit that transmits the information indicating the maximum transmit power to the user equipment.

## Description

### TECHNICAL FIELD

The present invention relates to a base station apparatus and user equipment in a wireless communication system.

### BACKGROUND ART

In 3GPP (3rd Generation Partnership Project), the wireless communication systems called 5G or NR (New Radio), (which are hereinafter referred to as 5G or NR), have been developed for achievement of larger system capacities, higher data transmission rates, and lower latency in a radio section, etc. For 5G, various wireless communication technologies have been discussed in order to meet requirements in which latency in the radio section is 1 ms or less as well as achieving the throughput of 10Gbps or more.

In NR, radio communications employing millimeter waves are considered and are assumed to cover a wide range of frequencies up to a higher frequency band than that in LTE. For the high frequency band, since propagation loss is particularly increased, beamforming with narrow beam width is applied in order to compensate for such propagation loss (see, e.g., Non-Patent Document 1).

### Prior Art Document

### [Non-Patent Document]

Non-Patent Document 1: 3GPP TS 38.211 V15.1.0 (2018-03)

### SUMMARY OF THE INVENTION

### [PROBLEM TO BE SOLVED BY THE INVENTION]

In the current situation of discussion of NR systems, a maximum transmit power is not clearly defined under a condition such as frequency bands used, whether or not to apply carrier aggregation, or whether or not to apply dual connectivity (hereinafter, which is also referred to as "DC") including use in LTE, etc. For this reason, when user equipment performs transmission in the NR systems, transmit power control as desired may face difficulties.

In view of the point described above, an object of the present invention is directed to user equipment that properly performs transmit power control in a wireless communication system.

### [MEANS FOR SOLVING PROBLEM]

According to disclosed techniques, there is provided a first base station apparatus among a plurality of base station apparatuses for communicating with user equipment, the first base station apparatus having: a transmitting unit that transmits, to a second base station apparatus among the plurality of base station apparatuses, information indicating a maximum transmit power of the user equipment with respect to the first base station apparatus and the second base station apparatus; a receiving unit that receives, from the second base station apparatus, information for a request to configure the maximum transmit power; and a setting unit that transmits the information indicating the maximum transmit power to the user equipment.

### [ADVANTAGE OF THE INVENTION]

According to the disclosed techniques, the user equipment is capable of properly performing transmit power control in a wireless communication system.

### BRIEF DESCRIPTION OF DRAWINGS

Fig. 1 is a diagram illustrating a configuration example (1) of a wireless communication system according to an embodiment of the present invention;
Fig. 2 is a diagram illustrating a configuration example (2) of the wireless communication system according to the embodiment of the present invention;
Fig. 3 is a diagram illustrating a configuration example of a circuit for performing digital beamforming;
Fig. 4 is a diagram illustrating a configuration example of a circuit for performing analog beamforming;
Fig. 5 is a diagram illustrating a configuration example of a circuit for performing hybrid beamforming;
Fig. 6 is a diagram for explaining communications between base station apparatuses according to the embodiment of the present invention;
Fig. 7 is a diagram illustrating a changed specification example (1) according to the embodiment of the present invention;
Fig. 8 is a diagram illustrating a changed specification example (2) according to the embodiment of the present invention;
Fig. 9 is a sequence diagram for explaining transmit power control according to the embodiment of the present invention;
Fig. 10 is a diagram illustrating a changed specification example (3) according to the embodiment of the present invention;
Fig. 11 is a diagram illustrating a changed specification example (4) according to the embodiment of the present invention;
Fig. 12 is a diagram illustrating an example of a functional configuration of a base station apparatus 100 according to the embodiment of the present invention;
Fig. 13 is a diagram illustrating an example of a functional configuration of user equipment 200 according to the embodiment of the present invention; and
Fig. 14 is a diagram illustrating an example of a hardware configuration of the base station apparatus 100 or the user equipment 200 according to the embodiment of the present invention.

### [EMBODIMENTS OF THE INVENTION]

Explanation will be hereinafter provided for an embodiment of the present invention with reference to the drawings. It is noted that the embodiment to be described below is merely an example, and the embodiment for which the present invention applies is not limited to the embodiment below.

In operating a wireless communication system according to the embodiment of the present invention, existing techniques are used as appropriate. The existing techniques contain, for example, existing LTE, but are not limited thereto. The term "LTE" used in the specification broadly means LTE-Advanced, and systems (e.g., NR or 5G) used after LTE-Advanced, unless otherwise stated.

In the embodiment of the present invention to be described below, the terms used in the existing LTE, such as SS (Synchronization Signal), PSS (Primary SS), SSS (Secondary SS), PBCH (Physical broadcast channel), PRACH (Physical RACH), are used for ease of description. However, similar signals, functions and so forth to these terms may be referred to by other terms.

In the embodiment of the present embodiment, a duplex system may be TDD (Time Division Duplex) system, FDD (Frequency Division Duplex) system, or other systems (e.g., Frequency Duplex, etc.).

Also, in the following description, in transmitting a signal by using a transmission beam, a signal multiplied by a pre-coding vector (pre-coded with pre-coding vector) may be transmitted. Similarly, in receiving a signal by using a reception beam, the signal may be multiplied by a predetermined weight vector. Further, in transmitting a signal by using a transmission beam, the signal may be transmitted from a specific antenna port. Similarly, in receiving a signal by using a reception beam, the signal may be received from a specific antenna port. The antenna port is referred to as a logical antenna port or a physical antenna port, which are defined by 3GPP standard.

It is noted that a method of forming the transmission beam or the reception beam is not limited to the above method. For example, in the base station apparatus 100 or user equipment 200, each of which is provided with a plurality of antennas, a method of changing the respective antenna angles may be implemented, or a method of combining a method of using a pre-coding vector with the method of changing the antenna angles may be implemented. Alternatively, switching different antenna panels may be implemented, a method of using a combination of multiple antenna panels may be implemented, or alternatively, other methods may be implemented. Also, for example, in a high-frequency band, multiple transmission beams that are different from each other may be used. Using the multiple transmission beams is referred to as multi-beam-operation, and using a single transmission beam is referred to as single-beam-operation.

In the embodiment of the present invention, in "configuring" a radio parameter or so forth, a predetermined value may be pre-configured or be defined, or alternatively, a radio parameter indicated by the base station apparatus 100 or the user equipment 200 may be configured.

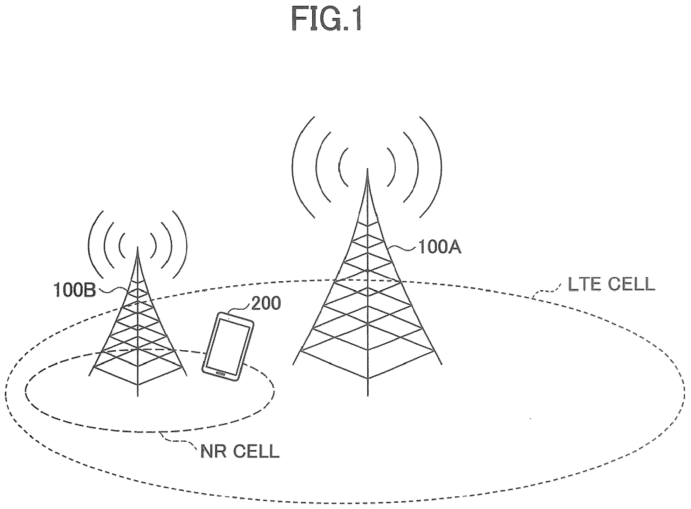

Fig. 1 is a diagram illustrating a configuration example (1) of a wireless communication system according to an embodiment of the present invention. The wireless communication system according to the embodiment of the present invention includes base station apparatuses 100 and user equipment 200, as illustrated in Fig. 1. In Fig. 1, two base station apparatuses 100 and one user equipment 200 are depicted. However, this is an example, and the number of base station apparatuses 100 and user equipment 200 may be further increased.

The base station apparatuses 100 provide one or more cells and are communication apparatuses that wirelessly communicate with the user equipment 200. For example, as illustrated in Fig. 1, a base station apparatus 100A provides a LTE cell, and a base station apparatus 100B provides a NR cell (when not distinguished, they are collectively referred to as "base station apparatuses 100" hereafter). The base station apparatus 100B provides one or more NR cells and is a communication apparatus that wirelessly communicates with the user equipment 200 in NR. When the base station apparatus 100B communicates with the user equipment 200 in NR, the base station apparatus 100A and the base station apparatus 100B may simultaneously communicate with the user equipment 200 using dual connectivity. The dual connectivity used in LTE and NR is also referred to as EN-DC (E-UTRA NR-DC) or MR-DC (Multi RAT-DC). The base station apparatus 100B and the user equipment 200 both may transmit and receive signals with beamforming. The base station apparatus 100B may communicate with the user equipment 200 using carrier aggregation in the NR cell. The carrier aggregation in the NR cell is also referred to as NR-CA. The base station apparatus 100A may communicate with the user equipment 200 using carrier aggregation in the LTE cell. In Fig. 1, when the dual connectivity and the carrier aggregation are applied, the base station apparatus 100A is a master eNB and constitutes a SpCell (Special Cell) of an MCG (Master Cell Group), and further, the base station apparatus 100B is a secondary gNB and constitutes a SpCell of an SCG (Secondary Cell Group).

Between the base station apparatus 100A and the base station apparatus 100B, inter-node RRC (Radio Resource Control) messages may be transmitted and be received over an inter-base station apparatus interface. Also, the base station apparatus 100B may include a functional configuration in which a CU (Central Unit, centralized base station apparatus) and a DU (Distributed Unit, remote station) are separated.

The base station apparatus 100 transmits information on power control of the user equipment 200 to the user equipment 200. The information on power control is a TPC (Transmission Power Control) command transmitted based on DCI (Downlink Control Information), for example. The TPC command allows an absolute value or a cumulative value with respect to PUSCH (Physical Uplink Shared Channel) transmit power to be indicated to the user equipment 200. The user equipment 200 transmits a UE capability report to the base station apparatus 100. The UE capability report includes a power class (PC) of the transmit power, for example. The user equipment 200 reports which power class is applied to the base station apparatus 100A. The user equipment 200 transmits an uplink transmission signal with beamforming to which transmit power control is applied according to the power class to the base station apparatus 100B.

For communication to which EN-DC and NR-CA in FR1 (Frequency Range 1) are applied, default power class may be introduced. In terms of UE capability, if the power class is not signaled, the default power class is employed. For this reason, when the default power class is employed, signaling overhead can be decreased. Alternatively, for communication to which EN-DC and NR-CA in FR1 are applied, P-Max may be introduced. P-Max refers to a maximum uplink transmit power on a certain carrier frequency. For example, P-Max is employed in a use case where a maximum transmit power is limited to 10 dBm, etc.

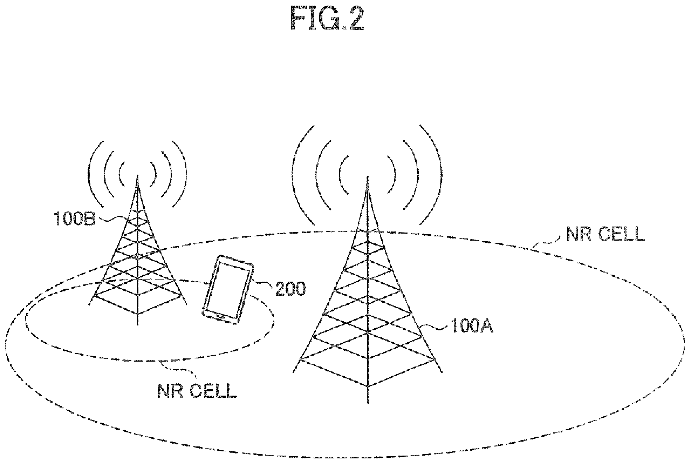

Fig. 2 is a diagram illustrating a configuration example (2) of the wireless communication system according to the embodiment of the present invention. As illustrated in Fig. 2, the wireless communication system according to the embodiment of the present invention includes base station apparatuses 100 and user equipment 200. In Fig. 2, two base station apparatuses 100 and one user equipment 200 are depicted. However, this is an example, and the number of base station apparatuses 100 and the user equipment 200 may be further increased.

As illustrated in Fig. 2, a base station apparatus 100A and a base station apparatus 100B provide NR cells. The base station apparatuses 100 provide one or more NR cells and are communication apparatuses that wirelessly communicate with the user equipment 200 in NR. When the base station apparatus 100B communicates with the user equipment 200 in NR, the base station apparatus 100A and the base station apparatus 100B may simultaneously communicate with the user equipment 200 using dual connectivity. The base station apparatus 100A, the base station apparatus 100B, and the user equipment 200 may transmit and receive signals with beamforming. The base station apparatuses 100 may communicate with the user equipment 200 using carrier aggregation in the NR cell. In Fig. 2, in a case where the dual connectivity and the carrier aggregation are applied, the base station apparatus 100A is a master gNB and provides a SpCell of an MCG, and the base station apparatus 100B is a secondary gNB and provides a SpCell of an SCG.

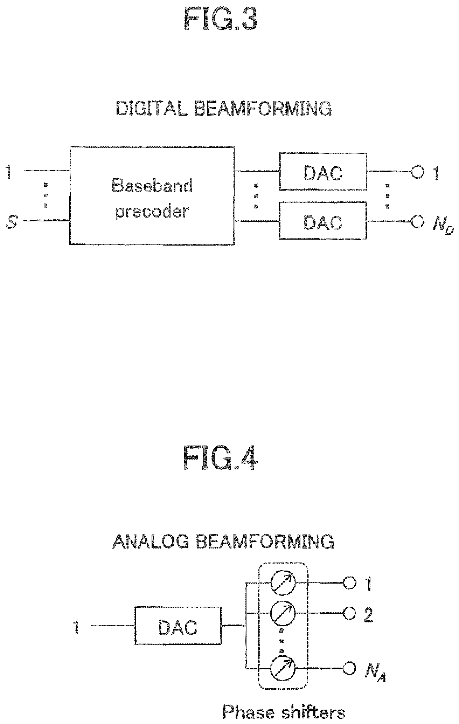

Fig. 3 is a diagram illustrating a configuration example of a circuit for performing digital beamforming. For a manner of implementing beamforming, as illustrated in Fig. 3, digital beamforming is considered in such a way that includes a same number of DACs (Digital Analog converters) as transmit antenna elements, as well as performing baseband signal processing of precoding the same number of times as the number of transmit antenna elements.

Fig. 4 is a diagram illustrating a configuration example of a circuit for performing analog beamforming. For a manner of implementing analog beamforming, as illustrated in Fig. 4, analog beamforming is considered in such a way that implements beamforming with use of variable phase shifters of an RF (Radio Frequency) circuit at a stage after transmission signals are converted into analog signals via a DAC.

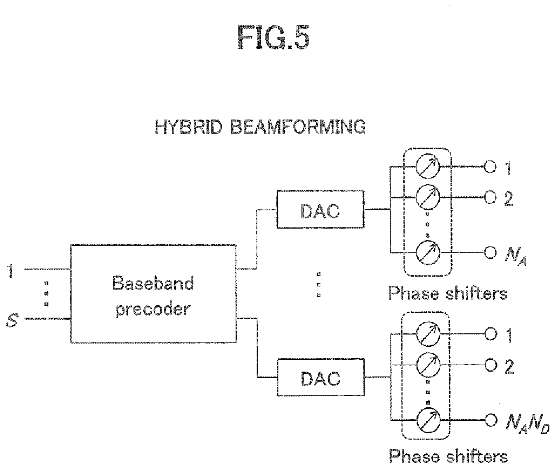

Fig. 5 is a diagram illustrating a configuration example of a circuit for performing hybrid beamforming. As illustrated in Fig. 5, hybrid beamforming is considered in such a way that implements beamforming processing with use of both of baseband signal processing of precoding, and variable phase shifters of an RF circuit by combining digital beamforming with analog beamforming.

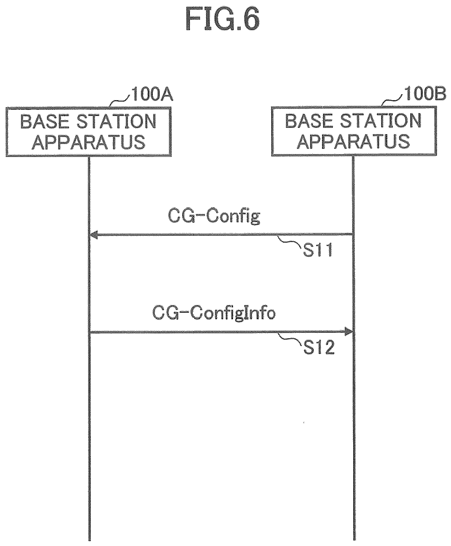

Fig. 6 is a diagram for explaining communications between the base station apparatuses according to the embodiment of the present invention. In Fig. 6, the base station apparatus 100A is the master eNB or the master gNB, and the base station apparatus 100B is the secondary gNB. At least one band of band(s) of the cell(s) that the base station apparatus 100B provides is covered by a frequency band in FR1. The base station apparatus 100A and the base station apparatus 100B communicate with the user equipment 200 with NR-DC.

In step S11, "CG-Config" indicating an inter-node RRC message is transmitted from the base station apparatus 100B to the base station apparatus 100A. "CG-Config" includes information indicating P-Max indicative of a maximum uplink transmit power of the user equipment 200. The base station apparatus 100B transmits "CG-Config" to the base station apparatus 100A whereby it is possible to request for configuring a P-Max value applied to the maximum uplink transmit power of the user equipment 200.

In step S12, "CG-ConfigInfo" indicating an inter-node RRC message is transmitted from the base station apparatus 100A to the base station apparatus 100B. "CG-ConfigInfo" includes information indicating P-Max indicative of the maximum uplink transmit power of the user equipment 200. The base station apparatus 100A transmits "CG-Config" to the base station apparatus 100B whereby it is possible to indicate the P-Max value applied to the maximum uplink transmit power of the user equipment 200. It is noted that "CG-ConfigInfo" transmitted by the base station 100A in step S12 may include information indicating P-Max based on "CG-Config" transmitted by the base station apparatus 100B in step S11.

It is noted that "CG-ConfigInfo" indicating the inter-node RRC message may be transmitted from a CU to a DU with respect to the base station apparatus 100A or the base station apparatus 100B.

Step S11 and step S12 may be independently performed, for example, either of these steps may be only performed. Alternatively, with respect to an order of step S11 and step S12, either of these steps may be performed firstly.

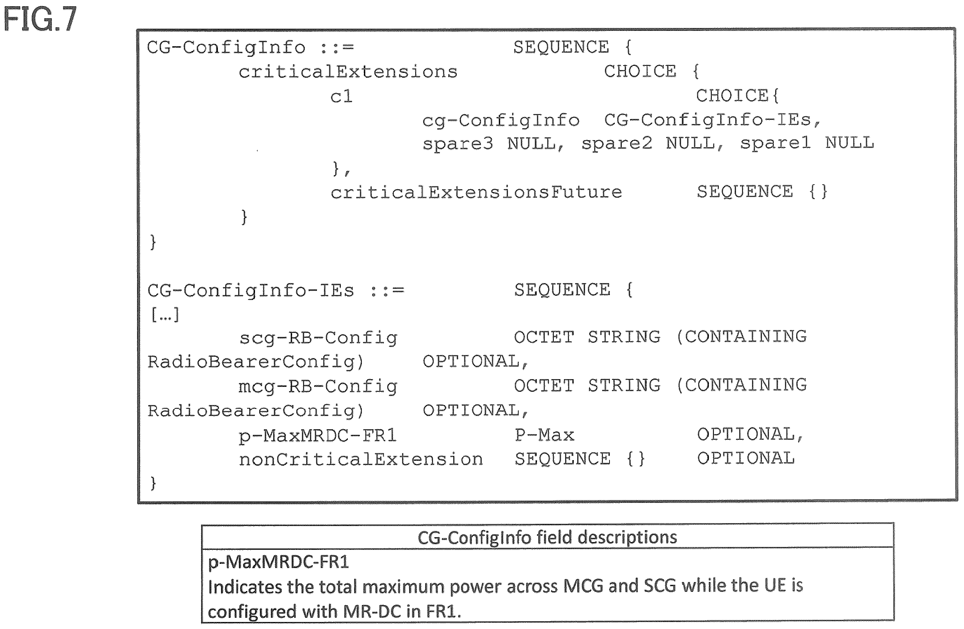

Fig. 7 is a diagram illustrating a changed specification example (1) according to the embodiment of the present invention. As illustrated in Fig. 7, "CG-ConfigInfo-IEs" contained in "CG-ConfigInfo" includes information elements "p-MaxMRDC-FR1" and "P-Max". When the user equipment 200 configures MR-DC covering at least one band in FR1, "p-MaxMRDC-FR1" indicates the total maximum transmit power across MCG and SCG.

It is noted that in a case where ED-DC does not cover the band in FR1 and covers a band in FR2 (Frequency Range 2), P-Max based on "p-MaxMRDC-FR1" is not required to be applied to communication.

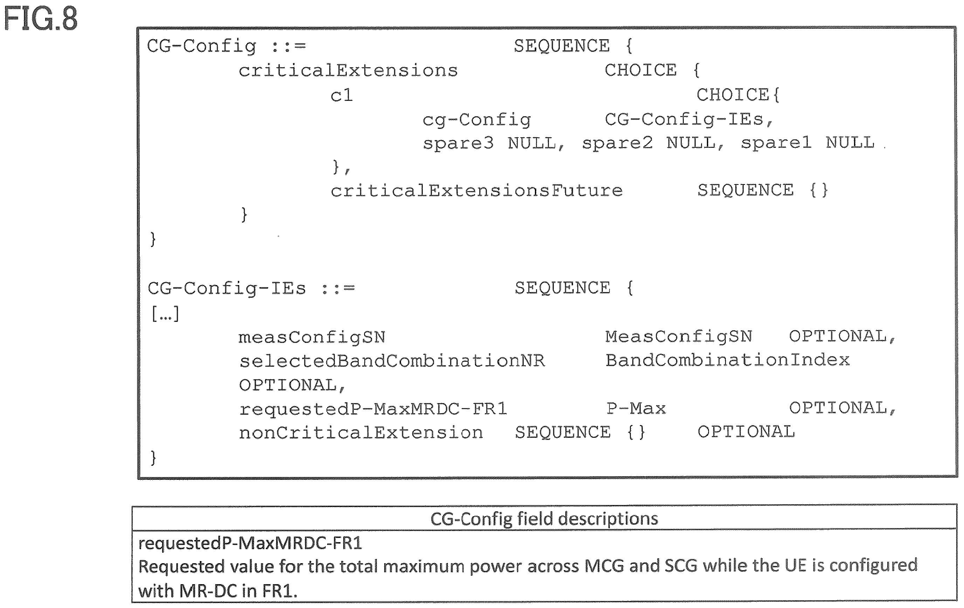

Fig. 8 is a diagram illustrating a changed specification example (2) according to the embodiment of the present invention. As illustrated in Fig. 8, "CG-Config-IEs" contained in "CG-Config" includes information elements "requestedP-MaxMRDC-FR1" and "P-Max". When the user equipment 200 configures MR-DC covering at least one band in FR1, "requestedP-MaxMRDC-FR1" requests the total maximum transmit power across MCG and SCG.

It is noted that in a case where EN-DC does not cover the band in FR1 and covers a band in FR2, P-Max based on "requestedP-MaxMRDC-FR1" is not required to be applied to communication.

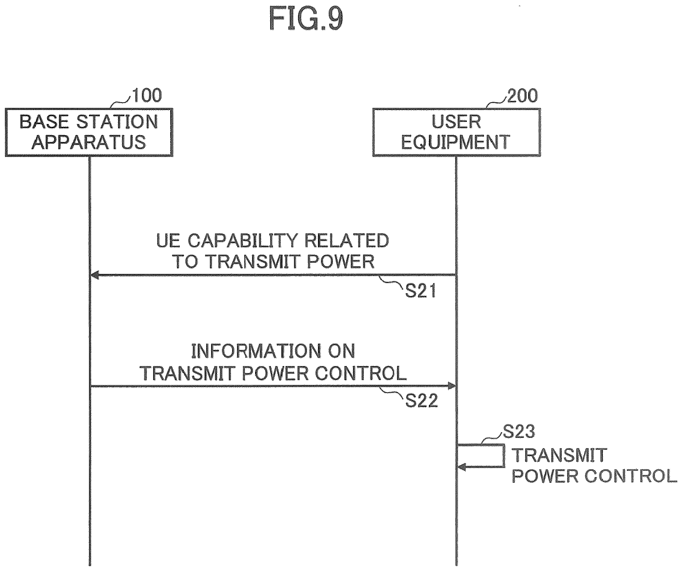

Fig. 9 is a sequence diagram for explaining transmit power control according to the embodiment of the present invention. In Fig. 9, the base station apparatus 100 communicates with the user equipment 200 with NR-CA including at least one band in FR1.

In step S21, the user equipment 200 may indicate UE capability related to the transmit power to the base station apparatus 100. The UE capability related to the transmit power includes, for example, a power class in FR1, a power class in FR2, a power class for NR-CA in FR1, and/or so forth. It is noted that the indicated UE capability related to the power transmit may include only a power class other than the default power class.

In step S22, information related to transmit power control is transmitted by the base station apparatus 100 to the user equipment 200. The information related to transmit power control includes, for example, a TPC command, parameter(s) for determining the maximum transmit power, and so forth. The information related to transmit power control includes P-Max indicating the maximum uplink transmit power of the user equipment 200.

In step S23, the user equipment 200 performs transmit power control based on the information related to power control as received in step S22. For example, the user equipment 200 may obtain P_Max from the received information related to power control to calculate P_CMAX. Alternatively, the user equipment 200 may obtain the TPC command from the received information related to power control to perform transmit power control. P_CMAX refers to configured transmitted power.

P_CMAX during NR-CA is defined as follows. The following P-EMAX corresponds to P-Max indicating the maximum uplink transmit power of the user equipment 200. If the number of component carriers in FR1 is 2 or more, P_CMAX, NR-CA=min{power class for NR-CA, P-EMAX for NR-CA}. If the number of component carriers in FR1 is 1 or less, P_CMAX, NR-CA=min{power class for non-CA, P-EMAX for non-CA}.

As described above, P_CMAX and NR-CA used in calculating P_CMAX for EN-DC or MR-DC are calculated based on the number of component carriers in NR FR1 covered by a band combination for EN-DC. P-Max for NR-CA and P-Max for non-CA can be independently configured, and different values may be set to them. The power class for NR-CA and the power class for non-CA can be independently configured, and different values may be set to them. It is noted that non-CA means that carrier aggregation is not performed.

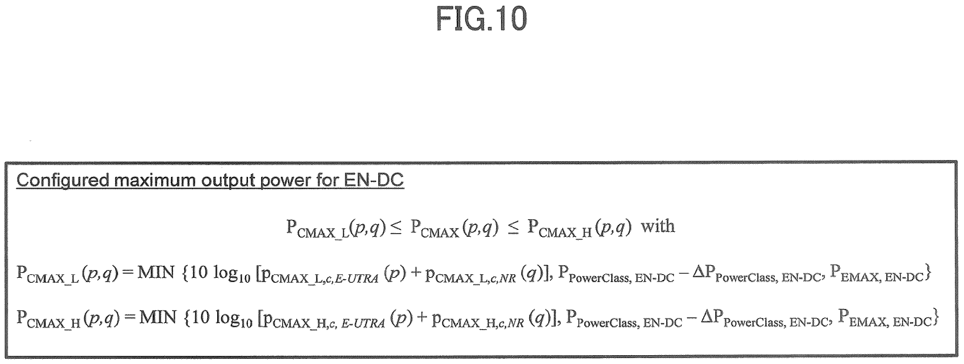

Fig. 10 is a diagram illustrating a changed specification example (3) according to the embodiment of the present invention. Formulas illustrated in Fig. 10 define configured maximum transmit power P_{CMAX}(p, q) for EN-DC, where p denotes a LTE subframe, and q denotes a NR slot. The subframe p and the slot q are overlapped in the time domain.

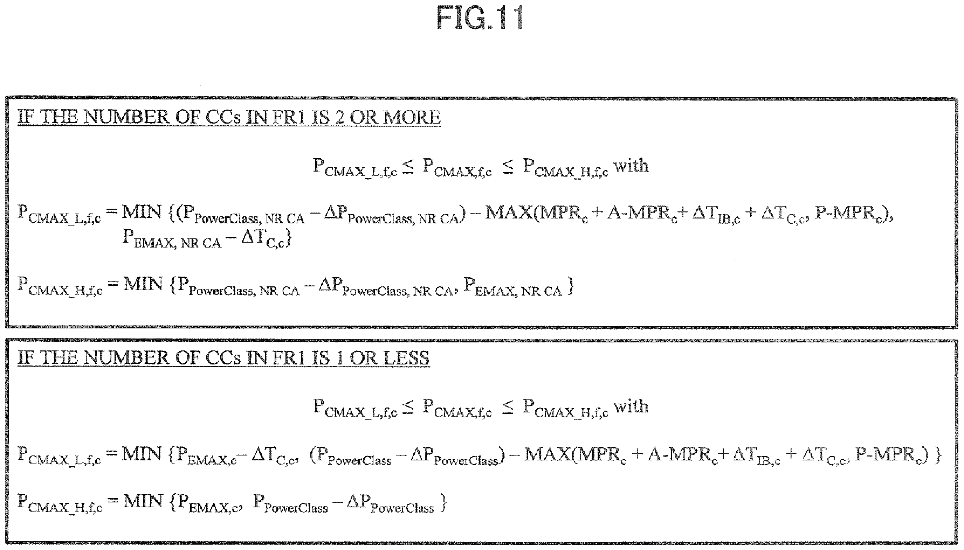

For P_{CMAX}(p, q) for EN-DC, a low limit is defined by P_{CMAX}__{L(p, q)}, and a high limit is defined by P_{CMAX}__{H(p, q)}. P_{CMAX_L,C,E-UTRA}(p) expressed in linear scale denotes a low limit for E-UTRA, and P_{CMAX_H,C,E-UTRA}(p) expressed in linear scale denotes a high limit for E-UTRA. P_{CMAX_L,C,NR}(q) expressed in linear scale denotes a low limit in NR, and P_{CMAX_H,C,NR}(p) expressed in linear scale denotes a high limit in NR. The definition of P_{CMAX}__{L,C,NR}(q) and P_{CMAX}__{H,C,NR}(p) below will be explained with reference to Fig. 11.

P_{PowerClass,EN-DC} is a power class defined for each of band combinations for EN-DC. ΔP_{PowerClass,EN-DC} denotes a difference between P_{PowerClass,EN-DC} and Pp_{owerClass,Default,EN-DC} indicating default power class. ΔP_{powerClass,EN-DC} is applied in a case where P-Max corresponding to P_{EMAX,EN-DC} is not indicated, or a maximum transmit power of the indicated P-Max is equal to, or less than, the default power class. Otherwise, ΔP_{PowerClass,EN-DC} is 0 dB.

Fig. 11 is a diagram illustrating a changed specification example (4) according to the embodiment of the present invention. Formulas illustrated in Fig. 11 define a configured maximum transmit power P_{CMAX_L,C,NR}(q) and P_{CMAX_H,C,NR}(q).

Firstly, explanation will be provided below for a case in which the number of CCs in FR1 is 2 or more. P_{CMAX_L,F,C} denotes a low limit, and P_{CMAX_H,F,C} denotes a high limit. P_{PowerClass,NR CA} is a power class defined for each of band combinations for NR-CA. ΔP_{PowerClass,NR CA} is a predetermined correction value. ΔT_{IB,c} denotes additional tolerance. ΔT_{C,c} is a predetermined correction value. All of MPR_{c}, A-MPR_{c}, and P-MPR_{c} denote a maximum power reduction value. MPR is defined with a modulation format, bandwidth, and so forth. P_{EMAX,NR CA} corresponds to P-Max.

Secondly, explanation will be provided below for a case in which the number of CCs in FR1 is 1 or less. P_{CMAX_L,F,C} denotes a low limit, and P_{CMAX_H,F,C} denotes a high limit. P_{PowerClass} is a power class defined for each of bands in NR. ΔP_{PowerClass} is a predetermined correction value. ΔT_{IB,c} denotes additional tolerance. ΔT_{C,c} is a predetermined correction value. All of MPR_{c}, A-MPR_{c}, and P-MPR_{c} denote a maximum power reduction value. P_{EMAx,c} corresponds to P-Max.

It is noted that P_CMAX for LTE CA is defined as follows. The following P-EMAX corresponds to P-Max indicating a maximum uplink transmit power of the user equipment 200. P-Max may be individually indicated to the user equipment 200 by the network.
If the number of component carriers in LTE is 2 or more, P_CMAX, NR-CA=min{power class for LTE-CA, P-EMAX for LTE-CA}.
If the number of component carriers in LTE is 1 or less, P_CMAX, NR-CA=min{power class for non-CA, P-EMAX for non-CA}.

As described above, in LTE-CA, P_CMAX and LTE-CA are calculated based on the number of component carriers included in a band combination in LTE. P-Max for LTE-CA, and P-Max for non-CA can be independently configured, and different values may be set to them. A power class for LTE-CA, and a power class for non-CA can be independently configured, and different values may be set to them.

In the embodiment described above, the base station apparatus 100 and the user equipment 200 can calculate the configured maximum transmit power for NR-CA. In addition, the base station apparatus 100 and the user equipment 200 can calculate the configured maximum transmit power for EN-DC. The base station apparatus 100 can indicate or request P-Max between a master base station and a secondary base station.

That is, the user equipment is capable of properly performing transmit power control in the wireless communication system.

### [Device Configuration]

Next, explanation will be provided for functional configurations of the base station apparatus 100 and the user equipment 200, which execute the processing and operation described above. Each of the base station apparatus 100 and the user equipment 200 includes at least functions for implementing the embodiment example. However, the base station apparatus 100 and the user equipment 200 may respectively comprise a portion of the functions described in the embodiment.

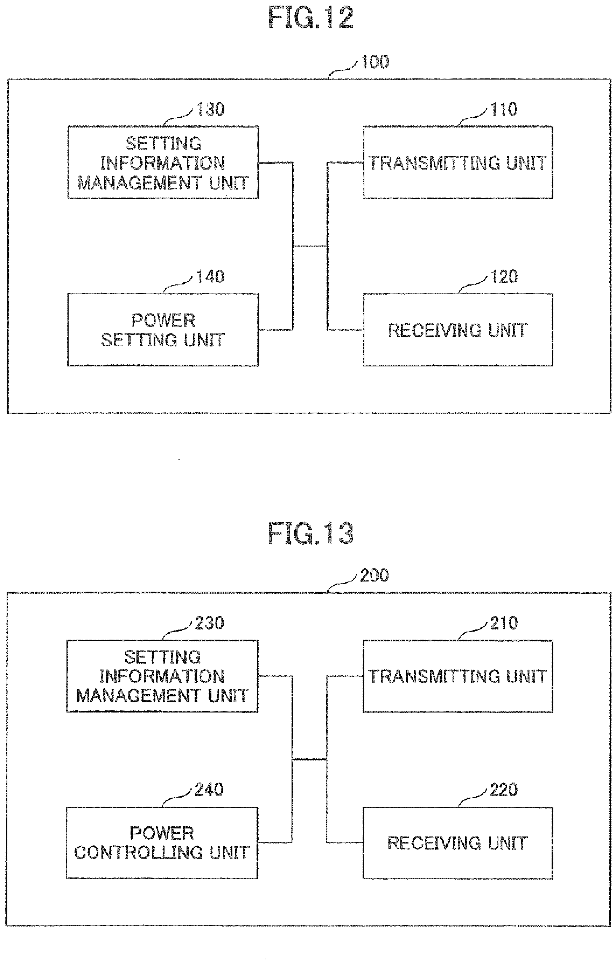

Fig. 12 is a diagram illustrating an example of a functional configuration of the base station apparatus 100. As illustrated in Fig. 12, the base station apparatus 100 has a transmitting unit 110, a receiving unit 120, a setting information management unit 130, and a power setting unit 140. The functional configuration illustrated in Fig. 12 is merely an example. Any name may be used for functional sections and functional units as long as the operation according to the embodiment of the present invention can be executed.

The transmitting unit 110 includes a function of generating signals to be transmitted to the user equipment 200 to transmit the signals by wireless. The receiving unit 120 includes a function of receiving various types of signal to obtain, for example, information on a higher layer from the received signal. Also, the receiving unit 120 demodulates NR-PUSCH based on PT-RS received from the user equipment 200. The transmitting unit 110 has a function of transmitting NR-PSS, NR-SSS, NR-PBCH, NR-PDCCH, NR-PDSCH, or so forth to the user equipment 200. Further, the transmitting unit 110 transmits various types of reference signal, e.g., DM-RS to the user equipment 200. The transmitting unit 110 transmits inter-RRC messages to another base station apparatus 100, and the receiving unit 120 receives the inter-RRC messages from the another base apparatus 100.

The setting information management unit 130 stores preset setting information, and various types of setting information to be transmitted to the user equipment 200. The content of the setting information is, for example, information on transmit power control of the user equipment 200, or so forth.

As described in the embodiment example, the power setting unit 140 transmits information on power control to another base station apparatus 100, and performs processing of the information on power control received from the another base station apparatus 100. Also, the power setting unit 140 transmits the information on power control from the base station apparatus 100 to the user equipment 200. It is noted that the transmitting unit 110 may include a functional unit relating to the transmission of signals to the user equipment 200, which is available to the power setting unit 140. The receiving unit 120 may include a function unit relating to the reception of signals from the user equipment 200, which is available to the power setting unit 140.

Fig. 13 is a diagram illustrating an example of a functional configuration of the user equipment 200. As illustrated in Fig. 13, the user equipment 200 has a transmitting unit 210, a receiving unit 220, a setting information management unit 230, and a power controlling unit 240. The functional configuration illustrated in Fig. 13 is merely an example. Any name may be used for functional sections and functional units as long as the operation according to the embodiment of the present invention can be executed.

The transmitting unit 210 generates a transmission signal from transmission data to transmit the transmission signal by wireless. The transmitting unit 210 transmits signals including various types of reference signal, e.g., PT-RS, and NR-PUSCH corresponding to PT-RS, to the base station apparatus 100. The receiving unit 220 wirelessly receives various types of signal to obtain a higher-layer signal from a received physical-layer signal. Also, the receiving unit 220 has a function of receiving NR-PSS, NR-SSS, NR-PBCH, NR-PDCCH, NR-PDSCH, or so forth that are transmitted by the base station apparatus 100. Further, the transmitting unit 210 transmits an uplink signal to the base station apparatus 100, and the receiving unit 220 receives various types of reference signal, e.g., DM-RS, PT-RS, or so forth from the base station apparatus 100. The setting information management unit 230 stores various types of setting information received from the base station apparatus 100 via the receiving unit 220. Also, the setting information management unit 230 stores preconfigured setting information. The content of the setting information is, for example, information on transmit power control of the user equipment 200, or so forth.

The power controlling unit 240, as described in the embodiment example, transmits UE capability related to the transmit power to the base station apparatus 100. Also, the power controlling unit 240 performs transmit power control based on the information related to power control received from the base station apparatus 100. It is noted that the transmitting unit 210 may include a functional unit relating to the transmission of signals to the base station apparatus 100, which is available to the power controlling unit 240. The receiving unit 220 may include a functional unit relating to the reception of signals from the base station apparatus 100, which is available to the power controlling unit 240.

### <Hardware Configuration>

The above diagrams (Fig. 12 and Fig. 13) illustrating the functional configurations used in the embodiment of the present invention indicate blocks per functional unit. These functional blocks (configuration units) are implemented by any combination of hardware and/or software. Also, means for implementing these functional blocks is not particularly limited. That is, each functional block may be implemented by one device in which multiple components are physically and/or logically coupled, or be implemented by two or more devices that are physically and/or logically separated from each other and are connected directly and/or indirectly (for example, in a wired manner and/or wirelessly).

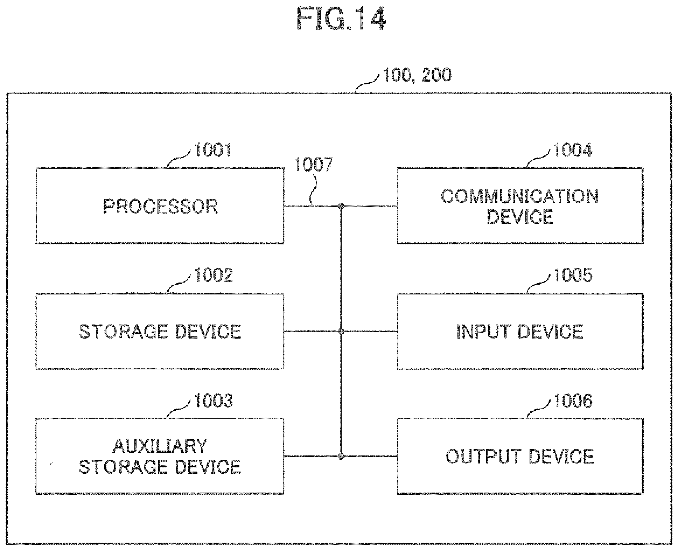

For example, the base station apparatus 100 and the user equipment 200 according to one embodiment of the present invention may function as a computer that performs processing according to the embodiment of the present invention. Fig. 14 is a block diagram illustrating an example of the hardware configuration of a wireless communication device that is the base station apparatus 100 or the user equipment 200 according to the embodiment of the present invention. Each of the above base station apparatus 100 and user equipment 200 may be physically configured as a computer device including, a processor 1001, a storage device 1002, an auxiliary storage device 1003, a communication device 1004, an input device 1005, an output device 1006, a bus 1007, and so forth.

It is noted that, in the following description, the term "device" can be replaced with a circuit, an apparatus, a unit, or so forth. The hardware configurations of the base station apparatus 100 and the user equipment 200 may include one or more of the respective devices that are represented by 1001 through 1006 of the figure, or may not include a part of the devices.

Each function of the base station apparatus 100 and the user equipment 200 may be implemented by the following processes: a predetermined software (program) is read onto hardware such as the processor 1001 or the storage device 1002, and the processor 1001 performs operation, and controls communication by the communication device 1004, and the reading and/or writing of data in the storage device 1002 and the auxiliary storage device 1003.

The processor 1001 runs, for example, an operating system to control the overall operation of the computer. The processor 1001 may be a central processing unit (CPU) including an interface with peripheral device, a control device, an arithmetic device, a register and so forth.

The processor 1001 reads a program (program code), a software module, or data from the auxiliary storage device 1003 and/or the communication device 1004 to the storage device 1002, and performs various types of process according to the program, the software module, or the data. A program that causes the computer to perform at least some of the operations described in the embodiment is used as the program. For example, the transmitting unit 110, the receiving unit 120, the setting information management unit 130, and the power setting unit 140 of the base station apparatus 100, as illustrated in Fig. 12, are stored in the storage device 1002, and these may be implemented by a control program executed by the processor 1001. Also, for example, the transmitting unit 210, the receiving unit 220, the setting information management unit 230, and the power controlling unit 240 of the user equipment 200, as illustrated in Fig. 13, are stored in the storage device 1002, and these may be implemented by a control program executed by the processor 1001. Explanation has been provided above for the case that the above various processes are performed by one processor 1001. However, such processes may be simultaneously or sequentially performed by two or more processors 1001. The processor 1001 may be mounted with one or more chips. It is noted that the program may be transmitted from the network through an electric communication line.

The storage device 1002 is a computer-readable recording medium and may include at least one of, for example, a ROM (Read Only Memory), an EPROM (Erasable Programmable ROM), an EEPROM (Electrically Erasable Programmable ROM), a RAM (Random Access Memory) and so forth. The storage device 1002 may be also referred to as a register, a cache, a main memory (main storage device), or so forth. The storage device 1002 can store a program (program code), a software module and so forth that can be executed to perform the processes according to one embodiment of the present invention.

The auxiliary storage device 1003 is a computer-readable recording medium and may be at least one of, for example, an optical disk such as a CD-ROM (Compact Disc ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a floppy (registered trademark) disk, a magnetic strip, and so forth. The auxiliary storage device 1003 may be referred to as an auxiliary storage device. The above storage medium may be, for example, a database including the storage device 1002 and/or the auxiliary storage device 1003, a server, and other proper media.

The communication device 1004 is hardware (transmission and reception device) for communicating with the computer through a wired and/or wireless network and is also referred to as, for example, a network device, a network controller, a network card, a communication module, or so forth. For example, the transmitting unit 110 and the receiving unit 120 of the base station apparatus 100 may be implemented by the communication device 1004. Also, the transmitting unit 210 and the receiving unit 220 of the user equipment 200 may be implemented by the communication device 1004.

The input device 1005 is an input device (for example, a keyboard, a mouse, a microphone, a switch, a button, a sensor or so forth) that receives an input from the outside. The output device 1006 is an output device (for example, a display, a speaker, an LED lamp or so forth) that performs an output to the outside. It is noted that the input device 1005 and the output device 1006 may be integrated with each other (for example, a touch panel).

All devices, such as the processor 1001 and the storage device 1002, are connected to each other via a bus 1007 for information communication. The bus 1007 may be a single bus, or such devices may be connected to each other via different buses.

The base station apparatus 100 and the user equipment 200 may include hardware, such as a microprocessor, a digital signal processor (DSP), an ASIC (Application Specific Integrated Circuit), a PLD (Programmable Logic Device), or an FPGA (Field Programmable Gate Array), or alternatively, some or all of the functional blocks may be implemented by the hardware. For example, the processor 1001 may be mounted with at least one of these hardware components.

### [Summary of the Embodiment]

As described above, according to the embodiment of the present invention, a first base station apparatus among a plurality of base station apparatuses that communicate with user equipment is provided, including: a transmitting unit that transmits, to a second base station apparatus among the plurality of base station apparatuses, information indicating a maximum transmit power of the user equipment with respect to the first base station apparatus and the second base station apparatus; a receiving unit that receives, from the second base station apparatus, information for a request to configure the maximum transmit power; and a setting unit that transmits the information indicating the maximum transmit power to the user equipment.

In such a configuration, the base station apparatus 100 and the user equipment 200 can indicate or request P-Max, between a master base station and a secondary base station. That is, the user equipment is capable of properly performing transmit power control in a wireless communication system.

The first base station apparatus is a master base station, the second base station apparatus is a secondary base station, and the second base station apparatus may communicate with the user equipment via one cell, or multiple cells with use of carrier aggregation. In such a configuration, the base station apparatus 100 and the user equipment 200 can calculate configured maximum transmit power for EN-DC.

The second base station apparatus is a master base station, the first base station apparatus is a secondary base station, and when the first base station apparatus communicates with the user equipment via one cell, or multiple cells with use of carrier aggregation, the first base station apparatus may transmit the information for the request to configure the maximum transmit power to the second base station apparatus. In such a configuration, the base station apparatus 100 and the user equipment 200 can calculate configured maximum transmit power for EN-DC.

The one cell or the multiple cells with use of carrier aggregation are NR cells, and at least one cell may cover a predetermined frequency band. In such a configuration, the base station apparatus 100 and the user equipment 200 can calculate configured maximum transmit power for EN-DC to which NR-CA is applied.

The maximum transmit power in a case in which the second base station apparatus communicates with the user equipment via the multiple cells with use of carrier aggregation, and the maximum transmit power in a case in which the second base station apparatus communicates with the user equipment via the one cell may be configured independently. In such a configuration, the base station apparatus 100 and the user equipment 200 can apply appropriate parameter(s) for use in both of NR-CA and non-CA in calculating configured maximum transmit power for EN-DC to which NR-CA is applicable.

Also, according to the embodiment of the present invention, user equipment that communicates with a first base station apparatus and a second base station apparatus is provided, including: a receiving unit that receives, from the first base station apparatus, information indicating a maximum transmit power of the user equipment with respect to the first base station apparatus and the second base station apparatus; a controlling unit that performs transmit power control based on the information indicating the maximum transmit power; and a transmitting unit that performs transmission to the first base station apparatus and the second base station apparatus based on the transmit power control.

In such a configuration, the base station apparatus 100 and the user equipment 200 can indicate or request P-Max between a master base station and a secondary base station. That is, the user equipment is capable of properly performing transmit power control in a wireless communication system.

### [Supplement to Embodiment]

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for description, but the numerical values are merely examples, and any suitable values may be used unless otherwise stated. The classification of items in the above description is not essential to the present invention, matters described in two or more items may be combined and used as necessary, and a matter described in one item may be applied to a matter described in another item (unless there is a contradiction). The boundary between functional units or processing units in a functional block diagram does not necessarily correspond to the boundary between physical parts. Operations of a plurality of functional units may be performed physically by one component, or an operation of one functional unit may be performed physically by a plurality of parts. In the processing procedures described in the embodiment, the order of processes may be changed as long as there is no inconsistency. For the sake of convenience of description, the base station apparatus 100 and the user equipment 200 have been described using the functional block diagrams, but such equipment may be implemented by hardware, software, or a combination thereof. The software executed by the processor of the base station apparatus 100 according to the embodiment of the present invention, and the software executed by the processor of the user equipment 200 according to the embodiment of the present invention, may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

The notification of information is not limited to the aspect/embodiment described in the specification, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (an MIB (Master Information Block) and an SIB (System Information Block)), other signals, or combinations thereof. The RRC signaling may be also referred to as an RRC message and may be, for example, an RRC connection setup message, an RRC connection reconfiguration message or so forth.

Each aspect/embodiment described in the specification may be applied to systems using LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other proper systems, and/or next-generation systems that are extended base on these systems.

In each aspect/embodiment described in the specification, the order of the processes in the procedure, the sequence, the flowchart and so forth may be changed as long as there is no contraction therebetween. For example, for the method described in the specification, elements of various steps are presented in the illustrative order and are not limited to the presented specific order.

In the specification, in some cases, the specific operation performed by the base station apparatus 100 may be performed by an upper node of the base station apparatus. In a network provided with one or more network nodes having the base station apparatus 100, it is apparent that various operations performed for communication with the user equipment 200 can be performed by another network node (for example, MME or S-GW is considered, but such a network node is not limited thereto) excluding the base station apparatus 100 and/or the user equipment 200. In the aforementioned example, one network node is provided other than the base station apparatus 100. However, a plurality of other network nodes (for example, MME and S-GW) may be combined with each other.

Each aspect/embodiment described in the specification may be used individually or in combination, or be switched according to the implementation thereof.

In some cases, the user equipment 200 is referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other proper terms by those skilled in the art.

In some cases, the base station apparatus 100 is referred to as NB (NodeB), eNB (evolved NodeB), gNB, a base station, or other proper terms by those skilled in the art.

In some cases, the terms "determining" and "determining" used in the specification include various operations. The terms "determining" and "deciding" may include "determination" and "decision", etc. for, e.g., judging, calculating, computing, processing, deriving, investigating, looking up (for example, search in a table, a database or other data structures), and ascertaining operations. Also, the terms "determining" and "deciding" may include "determination" and "decision", etc. for receiving (for example, receiving information), transmitting (for example, transmitting information), input, output, and accessing (for example, accessing data in a memory) operations. Further, the terms "determining" and "deciding" may include "determination" and "decision" for resolving, selecting, choosing, establishing, and comparing operations, etc. That is, the terms "determining" and "deciding" may include "determination" and "decision" for any operation.

The term "based on" used in the specification does not mean "based on only" unless otherwise stated. In other words, the term "based on" means both "based on only" and "based on at least".

The terms "include" and "including" and the modifications thereof are intended to be inclusive, similarly to the term "comprising", as long as they are used in the specification or the claims. In addition, the term "or" used in the specification or the claims is not intended to mean exclusive OR.

The articles, e.g., "a", "an", and "the" given in the present disclosure as a whole in an English translation may include two or more unless such plural form clearly departs from the context of the present disclosure.

It is noted that the power controlling unit 240 is an example of a controlling unit. The power setting unit 140 is an example of a setting unit. P-Max is an example of information indicating a maximum transmit power. FR1 is an example of a predetermined frequency band.

The present invention has been described above. It will be apparent to those skilled in the art that the present invention is not limited to the embodiment described in the specification. Various modifications and changes of the present invention can be made without departing from the spirit and scope of the present invention which are defined by the claims. Therefore, the specification is illustrative and does not limit the present invention.

### LIST OF REFERENCE SYMBOLS

- 100: BASE STATION APPARATUS
- 110: TRANSMITTING UNIT
- 120: RECEIVING UNIT
- 130: SETTING INFORMATION MANAGEMENT UNIT
- 140: POWER SETTING UNIT
- 200: USER EQUIPMENT
- 210: TRANSMITTING UNIT
- 220: RECEIVING UNIT
- 230: SETTING INFORMATION MANAGEMENT UNIT
- 240: POWER CONTROLLING UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A first base station apparatus among a plurality of base station apparatuses for communicating with user equipment, the first base station apparatus comprising:
a transmitting unit that transmits, to a second base station apparatus among the plurality of base station apparatuses, information indicating a maximum transmit power of the user equipment with respect to the first base station apparatus and the second base station apparatus;
a receiving unit that receives, from the second base station apparatus, information for a request to configure the maximum transmit power; and
a setting unit that transmits the information indicating the maximum transmit power to the user equipment.

2. The base station apparatus according to claim 1, wherein the first base station apparatus is a master base station, wherein the second base station apparatus is a secondary base station, and wherein the second base station apparatus communicates with the user equipment via one cell, or multiple cells with by carrier aggregation.

3. The base station apparatus according to claim 1, wherein the second base station apparatus is a master base station and the first base station apparatus is a secondary base station, and wherein, when the first base station apparatus communicates with the user equipment via one cell, or multiple cells by carrier aggregation, the first base station apparatus transmits the information for the request to configure the maximum transmit power to the second base station apparatus.

4. The base station apparatus according to claim 2, wherein the one cell or the multiple cells by the carrier aggregation are NR cells, and wherein at least one cell is included in a predetermined frequency band.

5. The base station apparatus according to claim 2, wherein the maximum transmit power in a case in which the second base station apparatus communicates with the user equipment via the multiple cells by the carrier aggregation, and the maximum transmit power in a case in which the second base station apparatus communicates with the user equipment via the one cell are configured independently.

6. User equipment for communicating with a first base station apparatus and a second base station apparatus, the user equipment comprising:
a receiving unit that receives, from the first base station apparatus, information indicating a maximum transmit power of the user equipment with respect to the first base station apparatus and the second base station apparatus;
a controlling unit that performs transmit power control based on the information indicating the maximum transmit power; and
a transmitting unit that performs transmission to the first base station apparatus and the second base station apparatus based on the transmit power control.
